## Europäisches Patentamt

## European Patent Office

## Office européen des brevets

(19)

(11) Veröffentlichungsnummer: **0 141 049**

**B1**

(12)

# EUROPÄISCHE PATENTSCHRIFT

(45) Veröffentlichungstag der Patentschrift:
**29.06.88**

(51) Int. Cl.⁴: **G 01 L 23/22**

(21) Anmeldenummer: **84108474.2**

(22) Anmeldetag: **18.07.84**

(54) **Schaltung zur Klopferkennung an einem Ottomotor.**

(30) Priorität: **02.08.83 DE 3327766**

(43) Veröffentlichungstag der Anmeldung:
**15.05.85 Patentblatt 85/20**

(45) Bekanntmachung des Hinweises auf die Patenterteilung:
**29.06.88 Patentblatt 88/26**

(84) Benannte Vertragsstaaten:
**DE FR GB IT**

(56) Entgegenhaltungen:
**DE-A-2 918 420**
**DE-A-3 006 665**
**DE-A-3 128 027**

(73) Patentinhaber: **Atlas Fahrzeugtechnik GmbH, Eggenpfad 26, D-5980 Werdohl (DE)**

(72) Erfinder: **Blauhut, Reinhold, Eggenpfad 24, D-5980 Werdohl (DE)**

(74) Vertreter: **Hassler, Werner, Dr., Postfach 17 04 Asenberg 62, D-5880 Lüdenscheid (DE)**

EP 0 141 049 B1

LIBER, STOCKHOLM 1988

**Beschreibung**

Die Erfindung betrifft eine Schaltung mit einem Hochspannungszündstromkreis zur Klopferkennung an einem Ottomotor, bei dem im Brennraum jedes Zylinders eine Zündkerze angeordnet ist, die gleichzeitig als Ionenstromsonde zur Erfassung der Erregungsspannungsmodulation dient, wobei einerseits ein Erregungsspannungsgenerator und andererseits eine, die Ausgabe einer Meßspannung bewirkende, Auswerteschaltung an den Hochspannungszündstromkreis über die Zündkerzenleitung angekoppelt sind.

Motorklopfen tritt dann auf, wenn während der Verbrennung unkontrollierte Verbrennungszustände auftreten. Dieses Klopfen ist für den Motor schädlich und kann zur Zerstörung desselben führen. Daher ist es ein wichtiges Problem, Motorklopfen sicher und genau zu erkennen.

Bekannte Schaltungen dieser Art arbeiten mit einer Erregungsgleichspannung. Die Einkopplung dieser Erregungsgleichspannung in den Hochspannungskreis erfolgt über einen hochohmigen Widerstand oder eine Hochspannungsdiode. Dieses sind kritische Bauelemente. Denn beim Ausfall eines dieser Bauelemente ist die gesamte Zündung kurzgeschlossen, so daß der Ottomotor nicht mehr arbeiten kann.

In der DE-OS 30 06 665 ist bereits vorgeschlagen, die Erregungsgleichspannung für den Ionenstrom aus dem Zündstrom abzuleiten. In diesem Fall steht jedoch die Erregungsspannung innerhalb der Betriebsperiode nur sehr kurzfristig zur Verfügung. Dieses ist für die meßtechnische Erfassung eines Klopfzustandes unzureichend.

Aufgabe der Erfindung ist eine solche Ausbildung einer Schaltung der genannten Art, daß kritische Bauelemente der genannten Art und eine galvanische Einkopplung vermieden werden können.

Diese Aufgabe wird nach der Erfindung durch folgende Merkmale gelöst:.

a) der Erregungsspannungsgeneratur ist ein Hochfrequenzoszillator:

b) die Einkopplung der Erregungsspannung durch diesen Hochfrequenzoszillator erfolgt nichtgalvanisch;

c) die Auswerteschaltung enthält einen Amplitudendemodulator für die Hochfrequenzspannung aus der Ionenstromsonde.

Die Erfindung unterscheidet sich dadurch in nicht naheligender Weise vom Stand der Technik, als durch Verwendung einer Hochfrequenzspannung als Erregungsspannung eine nichtgalvanische Einkopplung der Erregungsspannung und Auskopplung der Meßspannung möglich ist.

In Weiterbildung der Erfindung ist vorgesehen, daß der Hochfrequenzoszillator auf eine Frequenz zwischen 15 und 100 kHz abgestimmt ist.

In Weiterbildung der Erfindung ist vorgesehen, daß der Amplitudendemodulator ein Synchrondemodulator mit einem Produktendetektor ist.

In Weiterbildung der Erfindung ist vorgesehen, daß innerhalb der Auswerteschaltung dem Amplitudendemodulator ein Filter mit einem Durchlaßband von 8 bis 10 kHz nachgeschaltet ist.

In Weiterbildung der Erfindung ist vorgesehen, daß der Ausgang des Filters mit einer Schwellenwertschaltung verbunden ist.

In Weiterbildung der Erfindung ist vorgesehen, daß eine verteilerlose Zündschaltung vorgesehen ist, bei der die Einkopplung der in Form einer Hochfrequenzschwingung vorliegenden Erregungsspannung in Impulsform über einen Zündtransistor erfolgt.

In Weiterbildung der Erfindung ist vorgesehen, daß eine Zündung mit Verteiler vorgesehen ist, bei der die Einkopplung der in Form einer Hochfrequenzschwingung vorliegenden Erregungsspannung über einen Kondensator in die Zündkerzenleitung erfolgt.

In Weiterbildung der Erfindung ist vorgesehen, daß die Auskopplung der Hochfrequenzspannung der Ionenstromsonde in der Auswerteschaltung über einen Kondensator erfolgt.

In Weiterbildung der Erfindung ist vorgesehen, daß die Auskopplung der Hochfrequenzspannung der Ionenstromsonde in der Auswerteschaltung über einen hochohmigen Widerstand erfolgt.

In Weiterbildung der Erfindung ist vorgesehen, daß die Auskopplung der Hochfrequenzspannung der Ionenstromsonde in der Auswerteschaltung über einen Stromtransformator erfolgt.

Ausführungsformen der Erfindung werden im folgenden unter Bezugnahme auf die anliegende Zeichnung erläutert, in der darstellen:

Fig. 1   eine schematische Darstellung einer verteilerlosen Zündung und

Fig. 2   eine entsprechende schematische Darstellung einer Zündung mit Verteiler.

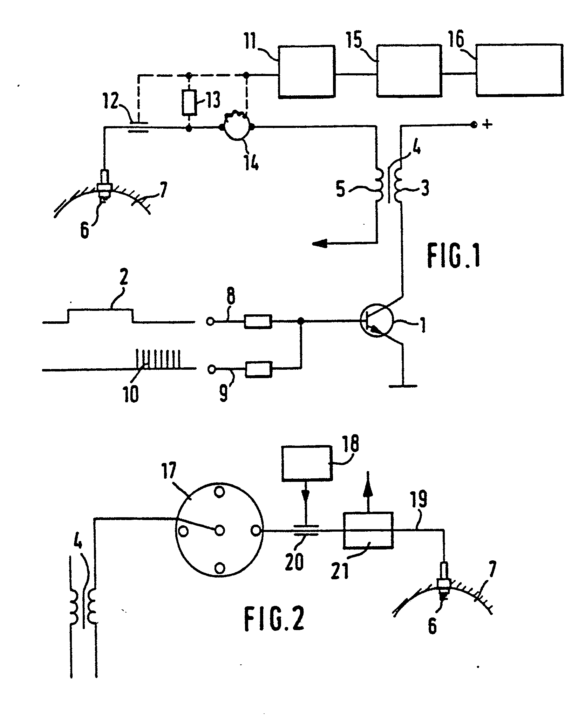

Fig. 1 zeigt einen Zündtransistor 1, dessen Basis mit einem Zündimpuls 2 beaufschlagt wird. Der Zündtransistor schaltet den Strom durch die Primärspule 3 des Zündtransformators 4. An die Sekundärspule 5 des Zündtransformators 4 ist eine Zündkerze 6 eines Verbrennungsraumes 7 bsw. Zylinders eines Ottomotors angeschlossen. Die weiteren Schaltelemente des Zündstromkreises, insbesondere die Richtleiter zur Anschaltung weiterer Zylinder sind hier nicht dargestellt.

Nach der Erfindung werden an den Zündtransistor parallel zu der Eingangsleitung 8 fü die Zündimpulse 2 über eine weitere Eingangsleitung 9 Hochfrequenzimpulse 10 angelegt, die von einem nicht dargestellten Hochfrequenzoszillator stammen und die jeweils im Anschluß an den Zündimpuls 2 erzeugt werden. Diese Hochfrequenzimpulse schalten kurzzeitig den Zündtransformator, so daß in der Sekundärspule eine Hochfrequenszspannung auftritt. Die Hochfrequenzimpulse 10 und damit die Hochfrequenzspannung haben eine Frequenz zwischen 15 und 100 kHz. Der entsprechende Hochfrequenzwechselstom ist dem Zündstrom überlagert und fließt über die Funkenstrecke der Zündkerze 6. Schwankungen des Brennverlaufs oder Störungen des Brennverlaufs, die als Klopfen bezeichnet werden, führen zu Schwankungen des Druckfeldes und des Ionenfeldes und damit zu einer Amplitudenmodulation der Hochfrequenzspannung. Diese Amplitudenmodulation wird in einem Demodulator 11 erfaßt.

Die Auskopplung der Hochfrequenzmeßspannung kann wahlweise mittels eines Kondensators 12, über einen hochohmigen Widerstand 13 oder über einen Stromtransformator 14 erfolgen. Dieses ist durch die gestrichelten Leitungsverbindungen angedeutet. Der Demodulator 11 ist ein Amplitudendemodulator. In der Demodulationsspannung sind unter anderem die Klopffrequenzen zwischen 8 und 10 kHz vorhanden. Diese werden in einem Filter 15 mit einem Durchlaßband zwischen 8 und 10 kHz ausgesiebt. An den Filter 15 ist eine Schwellenwertschaltung 16 angekoppelt. Dieselbe spricht dann an, wenn innerhalb des Durchlaßbandes des Filters 15 eine ausreichende Energie durchgelassen wird. Das Ausgangssignal der Schwellenwertschaltung stellt ein Klopfsignal dar und ermöglicht eine Verstellung des Zündzeitpunktes gegen den oberen Totpunkt hin, bis das Klopfen aufhört.

Der Demodulator 11 kann zweckmäßigerweise als Synchrondemodulator mit einem Produktendetektor ausgelegt sein. Ein Synchrondemodulator sieht bekanntlich eine hohe Verstärkung der Meßspannung mit anschließender Begrenzung und eine Produktenbildung zwischen dieser begrenzten Spannung und dem Originalsignal vor. Dadurch wird die Trägerfrequenz unterdrückt, so daß nur die Modulationsfrequenzen übrigbleiben.

Fig. 2 zeigt die Anwendung der Erfindung bei einer Zündung mit Verteiler 17. Da der Verteiler 17 eine Funkenstrecke enthält, muß die Hochfrequenzspannung des Hochfrequenzoszillators 18 in die Zündleitung 19 eingekoppelt werden. Es ist hier ein Koppelkondensator 20 zur kapazitiven Einkopplung dargestellt. Die Auskopplung erfolgt über eine Auskoppelschaltung 21, die in der oben beschriebenen Weise ausgebildet sein kann. Die nachgeschaltete Auswerteschaltung ist in Fig. 2 nicht dargestellt. Bei einer Zündung mit Verteiler genügt normalerweise die Klopfüberwachung eines Verbrennungsraumes oder Zylinders. Man kann jedoch selbstverständlich alle Zylinder überwachen. Dann muß die Hochfrequenzschwingung des Hochfrequenzoszillators 18 in sämtliche Zündleitungen für die anderen Verbrennungsräume eingekoppelt werden.

**Patentansprüche**

1. Schaltung mit einem Hochspannungszündstromkreis zur Klopferkennung an einem Ottomotor, bei dem im Brennraum jedes Zylinders eine Zündkerze angeordnet ist, die gleichzeitig als Ionenstromsonde zur Erfassung der Erregungsspannungsmodulation dient, wobei einerseits ein Erregungsspannungsgenerator und andererseits eine, die Ausgabe einer Meßspannung bewirkende, Auswerteschaltung an den Hochspannungszündstromkreis über die Zündkerzenleitung angekoppelt sind, gekennzeichnet durch folgende Merkmale:
a) der Erregungsspannungsgeneratur ist ein Hochfrequenzoszillator;
b) die Einkopplung der Erregungsspannung durch diesen Hochfrequenzoszillator erfolgt nichtgalvanisch;
c) die Auswerteschaltung enthält einen Amplitudendemodulator (11) für die Hochfrequenzspannung aus der Ionenstromsonde.

2. Schaltung nach Anspruch 1, dadurch gekennzeichnet, daß der Hochfrequenzoszillator auf eine Frequenz zwischen 15 und 100 kHz abgestimmt ist.

3. Schaltung nach Anspruch 1 oder 2, dadurch gekennzeichnet, daß der Amplitudendemodulator ein Synchrondemodulator mit einem Produktendetektor ist.

4. Schaltung nach einem der Ansprüche 1 bis 3, dadurch gekennzeichnet, daß innerhalb der Auswerteschaltung dem Amplitudendemodulator ein Filter mit einem Durchlaßband von 8 bis 10 kHz nachgeschaltet ist.

5. Schaltung nach Anspruch 4, dadurch gekennzeichnet, daß der Ausgang des Filters mit einer Schwellenwertschaltung verbunden ist.

6. Schaltung nach einem der Ansprüche 1 bis 5, dadurch gekennzeichnet, daß eine verteilerlose Zündschaltung vorgesehen ist, bei der die Einkopplung der in Form einer Hochfrequenzschwingung vorliegenden Erregungsspannung in Impulsform über einen Zündtransistor erfolgt.

7. Schaltung nach einem der Ansprüche 1 bis 5, dadurch gekennzeichnet, daß eine Zündung mit Verteiler vorgesehen ist, bei der die Einkopplung der in Form einer Hochfrequenzschwingung vorliegenden Erregungsspannung über einen Kondensator in die Zündkerzenleitung erfolgt.

8. Schaltung nach einem der Ansprüche 1 bis 7, dadurch gekennzeichnet, daß die Auskopplung der Hochfrequenzspannung der Ionenstromsonde in der Auswerteschaltung über einen Kondensator (12) erfolgt.

9. Schaltung nach einem der Ansprüche 1 bis 7, dadurch gekennzeichnet, daß die Auskopplung

der Hochfrequenzspannung der Ionenstromsonde in der Auswerteschaltung über einen hochohmigen Widerstand (13) erfolgt.

10. Schaltung nach einem der Ansprüche 1 bis 7, dadurch gekennzeichnet, daß die Auskopplung der Hochfrequenzspannung der Ionenstromsonde in der Auswerteschaltung über einen Stromtransformator (14) erfolgt.

## Claims

1. A circuit with a high voltage ignition circuit for knocking detection in an Otto cycle engine wherein arranged in the combustion chamber of each cylinder is a sparking plug which serves at the same time as an ionic current probe, for detecting excitation voltage modulation, wherein on the one hand an excitation voltage generator and on the other hand an evaluation circuit providing for the output of a measuring voltage are coupled to the high voltage ignition circuit by way of the sparking plug line, characterised by the following features:
a) the excitation voltage generator is a high frequency oscillator;
b) coupling-in of the excitation voltage by said high frequency oscillator is effected non-galvanically; and
c) the evaluation circuit includes an amplitude demodulator (11) for the high frequency voltage from the ionic current probe.

2. A circuit according to claim 1 characterised in that the high frequency oscillator is tuned to a frequency of between 15 and 100 kHz.

3. A circuit according to claim 1 or claim 2 characterised in that the amplitude demodulator is a synchronous demodulator with a product detector.

4. A circuit according to one of claims 1 to 3 characterised in that within the evaluation circuit a filter with a pass band of from 8 to 10 kHz is connected on the output side of the amplitude demodulator.

5. A circuit according to claim 4 characterised in that the output of the filter is connected to a threshold value circuit.

6. A circuit according to one of claims 1 to 5 characterised in that there is provided a distributor-less ignition circuit in which coupling-in of the excitation voltage which is in the form of a high frequency voltage, in pulse form, is effected by way of an ignition transistor.

7. A circuit according to one of claims 1 to 5 characterised in that there is provided an ignition system with distributor, in which coupling-in of the excitation voltage which is in the form of a high frequency oscillation is effected by way of a capacitor into the sparking plug line.

8. A circuit according to one of claims 1 to 7 characterised in that coupling-out of the high frequency voltage of the ionic current probe in the evaluation circuit is effected by way of a capacitor (12).

9. A circuit according to one of claims 1 to 7 characterised in that coupling-out of the high frequency voltage of the ionic current probe in the evaluation circuit is effected by way of a high-ohmic resistor (13).

10. A circuit according to one of claims 1 to 7 characterised in that coupling-out of the high frequency voltage of the ionic current probe in the evaluation circuit is effected by way of a current transformer (14).

## Revendications

1. Montage comprenant un circuit de courant d'allumage à haute tension pour la reconnaissance de cognement dans un moteur à explosion à quatre temps, dans lequel est agencée, dans la chambre de combustion de chaque cylindre, une bougie d'allumage qui sert simultanément de sonde de courant ionique pour la détection de la modulation de la tension d'excitation, un générateur de tension d'excitation, d'une part, et un montage d'évaluation, produisant la sortie d'une tension de mesure, d'autre part, étant couplés au circuit de courant d'allumage à haute tension par l'intermédiaire de la ligne des bougies d'allumage, caractérisé par les particularités suivantes :
a) le générateur de tension d'excitation est un oscillateur à haute fréquence;
b) le couplage de la tension d'excitation par cet oscillateur à haute fréquence s'effectue d'une manière non galvanique;
c) le montage d'évaluation comporte un démodulateur d'amplitudes (11) pour la tension à haute fréquence provenant de la sonde de courant ionique.

2. Montage suivant la revéndication 1, caractérisé en ce que l'oscillateur à haute fréquence est accordé à une fréquence comprise entre 15 et 100 kHz.

3. Montage suivant l'une des revendications 1 et 2, caractérisé en ce que le démodulateur d'amplitudes est un démodulateur synchrone avec un détecteur des produits.

4. Montage suivant l'une des revendications 1 à 3, caractérisé en ce qu'un filtre présentant une bande de passage de 8 à 10 kHz est monté en aval du démodulateur d'amplitudes à l'intérieur du montage d'évaluation.

5. Montage suivant la revendication 4, caractérisé en ce que la sortie du filtre est reliée à un circuit à valeur de seuil.

6. Montage suivant l'une des revendications 1 à 5, caractérisé en ce qu'il est prévu un montage d'allumage sans distributeur dans lequel le couplage de la tension d'excitation, qui se présente sous la forme d'une oscillation à haute fréquence, s'effectue en forme d'impulsion par l'intermédiaire d'un transistor d'allumage.

7. Montage suivant l'une des revendications 1 à 5, caractérisé en ce qu'il est prévu un allumage à distributeur dans lequel le couplage de la tension d'excitation, qui se présente sous la forme d'une oscillation à haute fréquence, s'effectue par l'intermédiaire d'un condensateur dans la ligne des bougies d'allumage.

8. Montage suivant l'une des revendications 1 à 7, caractérisé en ce que le découplage de la tension à haute fréquence de la sonde de courant ionique s'effectue dans le montage d'évaluation par l'intermédiaire d'un condensateur (12).

9. Montage suivant l'une des revendications 1 à 7, caractérisé en ce que le découplage de la tension à haute fréquence de la sonde de courant ionique s'effectue dans le montage d'évaluation par l'intermédiaire d'une résistance à valeurs ohmiques élevées (13).

10. Montage suivant l'une des revendications 1 à 7, caractérisé en ce que le découplage de la tension à haute fréquence de la sonde de courant ionique s'effectue dans le montage d'évaluation par l'intermédiaire d'un transformateur de courant (14).

FIG.1

FIG.2